# EUROPEAN PATENT SPECIFICATION

(11) **EP 2 716 195 B1**
(45) Date of publication and mention of the grant of the patent: **09.12.2015**
(21) Application number: 13004706.1
(22) Date of filing: 27.09.2013
(51) Int. Cl.: A47K 3/28, F24J 2/34

(54) **Self-heated portable shower**
Selbstheizende transportfähige Dusche
Douche portative autochauffante

(30) Priority: 04.10.2012 IT TO20120865
(43) Date of publication of application: 09.04.2014
(73) Proprietor: R.P. Rivestimenti Plastici S.r.l., 10078 Venaria (TO) (IT)
(72) Inventor: Pennazio, Rinaldo, I-10078 Venaria Reale (TO) (IT)
(74) Representative: Garavelli, Paolo

(56) References cited:
- CA-A1- 2 164 989
- DE-A1- 3 819 243
- DE-A1- 19 909 900
- DE-B1- 2 740 378
- FR-A1- 2 908 503
- US-A- 5 507 275

## Description

The present invention refers to a self-heated portable shower. Such shower is equipped with suitable heating means, whose function is double: generating hot water for washing, and using the generated hot water also for heating the surrounding areas. For such purpose the inventive shower can also be transformed into gazebos or heating walls for swimming pools.

While showers in general are known in which water for washing is heated through solar panels, arrangements of self-heated portable showers of the claimed type are not known in the art, according to the knowledge of the Applicant of the present invention. DE-B1-27 40 378 and DE-A1-38 19 243 disclose portable showers according to the preamble of Claim 1.

Object of the present invention is providing a self-heated portable shower which can be easily transported, used and stored in environments of any type and size, due to its use and transport versatility, in addition to its configuration which can be bent and compacted on itself.

A further object of the present invention is providing a self-heated portable shower as described above, in which the hot water contained therein (heated through solar panels and therefore in a completely free way) is used both to wash, and to heat, increasing the use versatility and efficiency of the application.

The above and other objects and advantages of the invention, as will appear from the following description, are obtained with a self-heated portable shower as claimed in Claim 1. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:
- Figure 1 is a rear perspective view of an embodiment of the self-heated portable shower according to the present invention, in its operating position;
- Figure 2 is a front perspective view of the shower of Figure 1; and
- Figure 3 is a rear perspective view of the shower of Figure 1, in a bent position for its storage.

With reference to the Figures, a preferred embodiment of the self-heated portable shower of the present invention is shown and described. It will be immediately obvious that numerous variations and modifications (for example related to shape, sizes, arrangements and parts with equivalent functionality) can be made to what is described, without departing from the scope of the invention, as appears in the enclosed claims.

As shown in a preferred, but absolutely not limiting, embodiment of the present invention, the inventive self-heated portable shower 1 substantially comprises:
- at least one bearing base 3;
- at least one supporting structure 5 placed above the bearing base 3;
- at least one (and preferably two) solar panel 7 connected to the supporting structure 5 and placed preferably inside it, as shown; and
- serpentine-type means 9 for conveying heated water: such serpentine-type means 9 are contained inside the supporting structure 5 and are operatively connected to the at least one solar panel 7 for heating water contained therein.

In order to provide a reserve of hot water which is more than enough to wash oneself and at the same time allow heating as wide as possible a surrounding area with respect to the overall sizes of the shower 1, the serpentine-type means 9 substantially extend for the whole height of the shower 1 and are composed of a plurality of (in the drawings, preferably, sixteen) columns vertically elongated and mutually connected in order to obtain a continuous and extended path of water inside the serpentine-type means 9 themselves, For example, in a construction, non-limiting embodiment, the shower 1 of the invention can contain approximately 38 litres of water, but different sizes and configurations of the shower 1 are obviously possible. These litres of water provide a washing supply which is more than enough for many showers, and at the same time heat (in a similar way to a common radiator) the whole area surrounding the shower 1.

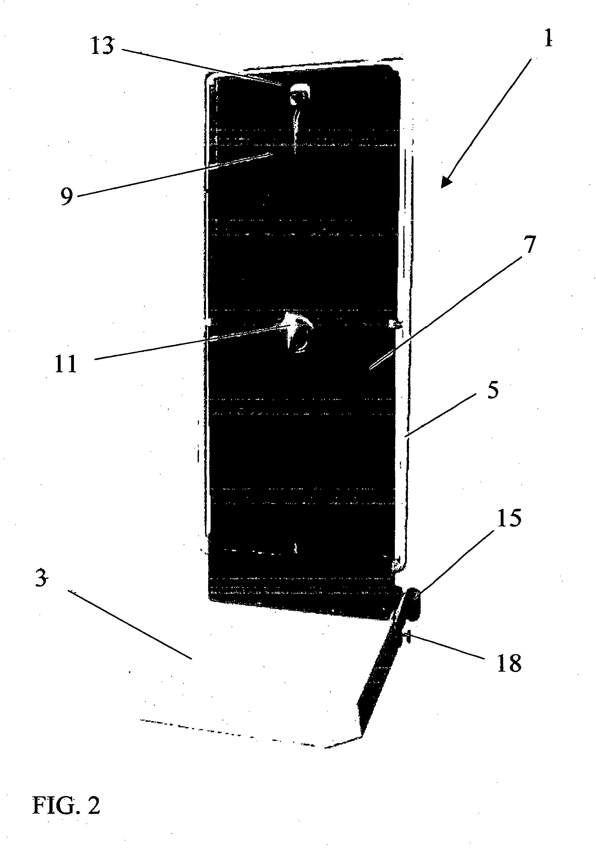

As can be seen in Figure 2, the shower 1 is equipped with a common handle 11, through which the water temperature to be delivered is regulated through a similarly common tap or shower plate 13.

The self-heated portable shower 1 of the invention can further be equipped with at least two wheels (in the embodiment shown, the wheels are four, placed in pairs of two) 15 connected to the bearing base 3 in order to allow the transport and perform an overturning preventing function of the shower 1 during its operating positioning.

Such wheels 1 can be connected to telescopic means 16 adapted to allow moving the wheels 15 between a transport position wherein they are in contact with the bearing base 3 and an operating position for the shower 1, wherein they are spaced from the bearing base 3. In the operating position for the shower 1, the telescopic means 16 also operate as overturning preventing supports for the shower 1 itself.

According to an automated variation of the inventive shower 1, the movement of the wheels 15 between its transport and operating positions for the shower 1 is driven through first actuating members 18, preferably of the push-button type.

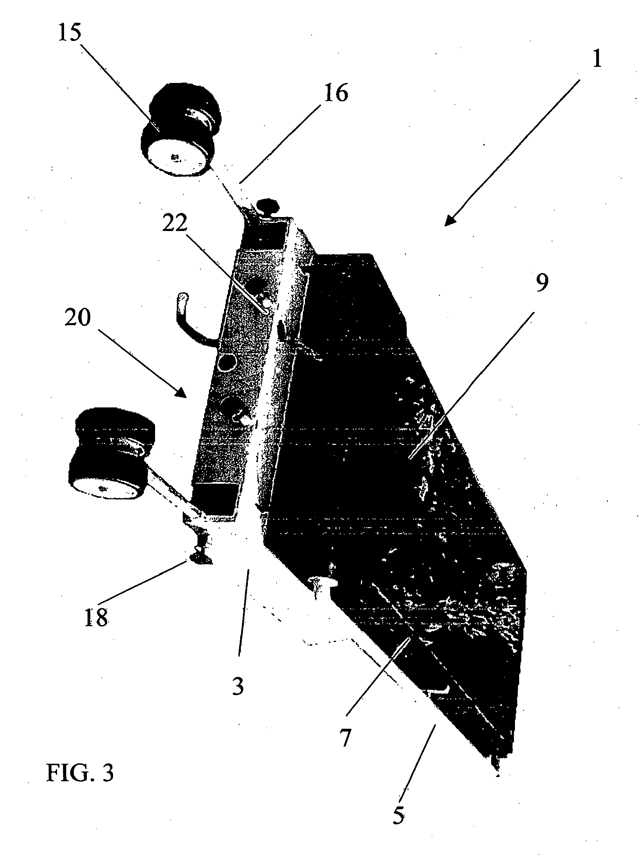

In order to enable both storage, and use in different operating positions, the supporting structure 5 is connected to the bearing base 3 with hinges, in order to be able to be folded down on top of the bearing base 3 (as can be seen in Figure 3) to reduce the overall sizes of the shower 1 in its rest position.

In the automated variation of the inventive shower 1, the supporting structure 5 can be bent onto the bearing base 3 in an automated way, through the use of motored means 20 driven by second actuating members 22, preferably of the push-button type.

As regards the operation of the above described shower 1, it is first of all transported to its operating position, for example in a garden; then, as shown in Figure 3, the wheels 15 are extended through the telescopic means 16 till a stability position is reached for the shower 1.

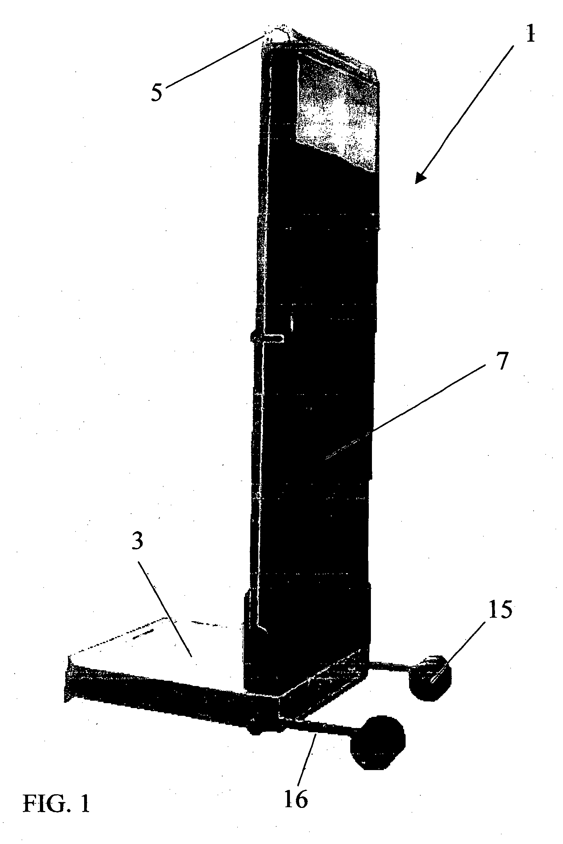

After this, the supporting structure 5 is lifted with respect to the bearing base 3, in order to reach the final operating condition, as shown in Figures 1 and 2.

At that time, the shower 1 is connected to a water supply, for example, in a garden, to a common rubber tube (not shown) and water is supplied therein till the complete filling of the serpentine-type means 9. Once having completed heating the water contained in the shower, through the solar panels 7, hot water can be used both for washing, and for heating (in a wholly similar way to a common radiator) the neighbourhood of the shower 1, in particular the place where a user is before and after having been washed himself, when he could need a surrounding hot environment.

In order to put back the shower 1 at rest after using it, obviously similar and contrary steps to those described above are performed, starting from emptying (facultative) the water present in the shower 1, through suitable openings (not shown) obtained in the supporting structure 5 or in the bearing base 3.

## Claims

1. Self-heated portable shower (1) comprising:
- at least one bearing base (3);
- at least one supporting structure (5) placed above said bearing base (3);
- at least one solar panel (7) connected to said supporting structure (5); and
- serpentine-type means (9) for conveying heated water, said serpentine-type means (9) being contained inside said supporting structure (5) and being operatively connected to said at least one solar panel (7) for heating water contained therein,
**characterised in that** said supporting structure (5) is connected to said bearing base (3) with hinges, in order to be able to be folded down on top of said bearing base (3) to reduce the overall sizes of said shower (1) in its rest position.

2. Self-heated portable shower (1) according to claim 1, **characterised in that** said serpentine-type means (9) substantially extend for the whole height of the shower (1) and are composed of a plurality of columns vertically elongated and mutually connected in order to obtain a continuous and extended path for water inside the serpentine-type means (9).

3. Self-heated portable shower (1) according to claim 1, **characterised in that** it is further equipped with at least two wheels (15) connected to said bearing base (3) in order to allow its transport and perform an overturning preventing function of said shower (1) during its operating positioning.

4. Self-heated portable shower (1) according to claim 3, **characterised in that** said at least two wheels (15) are connected to telescopic means (16) adapted to allow a movement of said wheels (15) between a transport position in which they are in contact with said bearing base (3) and an operating position for the shower (1), in which they are spaced from said bearing base (3), in said operating position for the shower (1) said telescopic means (16) also operating as overturning preventing supports for said shower (1).

5. Self-heated portable shower (1) according to claim 3 or 4, **characterised in that** the movement of said wheels (15) between their transport and operating positions for the shower (1) is driven through first actuating members (18), preferably of the push-button type.

6. Self-heated portable shower (1) according to claim 1, **characterised in that** said supporting structure (5) is adapted to be bent onto said bearing base (3) in an automated way, by using motored means (20) driven by second actuating members (22), preferably of the push-button type.

## Patentansprüche

1. Selbstheizende tragbare Dusche (1), die folgendes einschließt:
- Mindestens eine Stützbasis (3);
- Mindestens eine Stützstruktur (5), die über der genannten Stützbasis (3) angebracht ist;
- Mindestens ein Solarpaneel (7), das mit der genannten Stützstruktur (5) verbunden ist; und
- Rohrschlangen (9) für die Beförderung von erhitztem Wasser, die genannten Rohrschlangen (9) sind intern in der genannten Stützstruktur (5) enthalten, und sie sind für den Betrieb mit dem genannten mindestens einem Solarpaneel (7) für die Erhitzung des in diesen enthaltenen Wassers verbunden,
und **dadurch gekennzeichnet ist, dass** die genannte Stützstruktur (5) mit der genannten Stützbasis (3) durch Scharniere verbunden ist, sodass sie über der genannten Stützbasis (3) zusammengelegt werden kann, um den Platzbedarf der genannten Dusche (1) in ihrer Ruhestellung zu reduzieren.

2. Selbstheizende tragbare Dusche (1) gemäß Patentanspruch 1, die **dadurch gekennzeichnet ist, dass** sich die genannten Rohrschlangen (9) grundlegend an der gesamten Höhe der Dusche (1) ausdehnen und aus mehreren vertikalen länglichen Säulen bestehen, die miteinander verbunden sind, um einen fortlaufenden und erweiterten Weg des Wassers intern in den Rohrschlangen (9) zu schaffen.

3. Selbstheizende tragbare Dusche (1) gemäß Patentanspruch 1, die **dadurch gekennzeichnet ist, dass** sie außerdem mit mindestens zwei Rädern (15) ausgestattet ist, die mit der genannten Stützbasis (3) verbunden sind, um den Transport, zu ermöglichen, und eine Kippschutzfunktion der genannten Dusche (1) in der Positionierungsphase für den Betrieb auszuführen.

4. Selbstheizende tragbare Dusche (1) gemäß Patentanspruch 3, die **dadurch gekennzeichnet ist, dass** die genannten mindestens zwei Räder (15) durch Teleskopvorrichtungen (16) verbunden sind, die dazu dienen, die Verschiebung der genannten Räder (15) zwischen einer Transportposition, in der diese mit der genannten Stützbasis (3) in Kontakt treten, und einer Betriebsposition für die Dusche (1), in der diese von der genannten Stützbasis (3) entfernt sind, zu ermöglichen, in der genannten Betriebsposition für die Dusche (1) funktionieren die genannten Teleskopvorrichtungen (16) auch als Kippschutzvorrichtungen für die genannte Dusche (1).

5. Selbstheizende tragbare Dusche (1) gemäß Patentanspruch 3 oder 4, die **dadurch gekennzeichnet ist, dass** die Verschiebung der genannten Räder (15) zwischen den Transport- und Betriebspositionen für die Dusche (1) durch erste Antriebselemente (18), vorzugsweise mit Taste, gesteuert wird.

6. Selbstheizende tragbare Dusche (1) gemäß Patentanspruch 1, die **dadurch gekennzeichnet ist, dass** die genannte Stützstruktur (5) dazu dient, über der genannten Stützbasis (3) automatisch durch die Verwendung von motorisierten Vorrichtungen (20), die durch zweite Antriebselemente (22), vorzugsweise mit Taste, gesteuert werden, zusammengelegt zu werden.

## Revendications

1. Douche portable solaire (1) comprenant :
- au moins une base d'appui (3) ;
- au moins une structure de support (5) située sur la base d'appui (3) ;
- au moins un panneau solaire (7) relié à la structure de support (5) ; et
- des tuyaux en serpentin (9) de transport de l'eau chauffée qui se trouvent à l'intérieur de la structure de support (5) et sont reliés opérationnellement à un panneau solaire (7) au moins pour chauffer l'eau qu'ils contiennent,
**caractérisée en ce que** la structure de support (5) est reliée à la base d'appui (3) à l'aide d'une charnière pour pouvoir être repliée sur la base d'appui (3) et réduire ainsi l'encombrement de la douche (1) en position de repos.

2. Douche portable solaire (1), selon la revendication 1, **caractérisée en ce que** les tuyaux en serpentin (9) s'étendent sur toute la hauteur de la douche (1) et sont constitués d'une pluralité de colonnes allongées verticalement et reliées entre elles pour réaliser un parcours continu et étendu de l'eau à l'intérieur des tuyaux en serpentin (9).

3. Douche portable solaire (1), selon la revendication 1, **caractérisée en ce qu'**elle est dotée au moins de deux roues (15) reliées à la base d'appui (3) pour permettre le transport et exercer une fonction anti-basculement de la douche (1) en phase de positionnement opérationnel.

4. Douche portable solaire (1), selon la revendication 3, **caractérisée en ce que** deux roues (15) au moins sont reliées à des moyens télescopiques (16) permettant le déplacement des roues (15) entre une position de transport où elles se trouvent au contact de la base d'appui (3) et une position opérationnelle de la douche (1) où elles sont éloignées de la base d'appui (3) ; dans cette position opérationnelle, les moyens télescopiques (16) servent de soutien anti-basculement pour la douche (1).

5. Douche portable solaire (1), selon la revendication 3 ou 4, **caractérisée en ce que** le déplacement des roues (15) entre la position de transport et la position opérationnelle de la douche (1) est commandé par des premiers éléments d'actionnement (18), de préférence un bouton.

6. Douche portable solaire (1), selon la revendication 1, **caractérisée en ce que** la structure de support (5) peut être repliée sur la base d'appui (3) en mode automatisé, à travers l'utilisation de moyens motorisés (20) commandés par des seconds éléments d'actionnement (22), de préférence un bouton.
